Europäisches Patentamt

European Patent Office

Office européen des brevets

(19)

(11) **EP 0 811 153 B1**

(12) **EUROPÄISCHE PATENTSCHRIFT**

(45) Veröffentlichungstag und Bekanntmachung des Hinweises auf die Patenterteilung:
**14.10.1998 Patentblatt 1998/42**

(21) Anmeldenummer: **95929891.0**

(22) Anmeldetag: **18.08.1995**

(51) Int Cl.$^6$: **G01N 7/14**, F26B 25/22

(86) Internationale Anmeldenummer:
**PCT/EP95/03294**

(87) Internationale Veröffentlichungsnummer:
**WO 96/25654 (22.08.1996 Gazette 1996/38)**

(54) **VERFAHREN ZUR ERMITTLUNG DER RESTFEUCHTE WÄHREND DER NACHTROCKNUNG IN EINEM GEFRIERTROCKENPROZESS**

METHOD OF DETERMINING RESIDUAL MOISTURE CONTENT DURING SECONDARY DRYING IN A FREEZE-DRYING PROCESS

PROCEDE DE DETERMINATION DE L'HUMIDITE RESIDUELLE PENDANT LA DESSICCATION SECONDAIRE, DANS UN PROCESSUS DE LYOPHILISATION

(84) Benannte Vertragsstaaten:
**BE CH DE DK ES FR GB IT LI NL SE**

(30) Priorität: **14.02.1995 DE 19504814**

(43) Veröffentlichungstag der Anmeldung:
**10.12.1997 Patentblatt 1997/50**

(73) Patentinhaber: **Oetjen, Georg, Wilhelm**
**23556 Lübeck (DE)**

(72) Erfinder: **Oetjen, Georg, Wilhelm**
**23556 Lübeck (DE)**

(74) Vertreter: **Leineweber, Jürgen, Dipl.-Phys.**
**Aggerstrasse 24**
**50859 Köln (DE)**

(56) Entgegenhaltungen:
| | |
|---|---|
| **EP-A- 0 186 604** | **DE-A- 4 302 983** |
| **DE-A- 4 334 902** | **FR-A- 2 626 366** |
| **US-A- 4 168 623** | **US-A- 4 561 191** |
| **US-A- 4 606 650** | **US-A- 4 709 579** |
| **US-A- 5 280 678** | |

- **DEVELOPMENTS IN BIOLOGICAL STANDARDIZATION, Bd. 36, 1977 BASEL (SW), Seiten 181-189, JEWELL ET AL. 'moisture analysis of lyophilised allergenic extracts'**

**Beschreibung**

Die Gefriertrocknung ist ein Verfahren zur Entfernung des vorher gefrorenen Wassers, z.B. aus Pharmaka und Lebensmitteln. Das Verfahren wird im allgemeinen bei einem Luftdruck ausgeführt, der klein ist gegen den Wasserdampfdruck bei der gewählten Temperatur des Eises: Z.B. entspricht eine Eistemperatur von -20°C einem Wasserdampfdruck (im Gleichgewicht) von 1,03 mbar; damit der Wasserdampf von der Eisoberfläche in die Trockenkammer strömen kann, muß der Wasserdampfdruck in der Trockenkammer deutlich kleiner sein als 1,03 mbar, also z.B. 0,4 mbar. Nach dem oben Gesagten, muß der Luftdruck klein sein gegen 0,4 mbar, also z.B. 0,05 mbar.

Solange noch kristallisiertes (gefrorenes) Wasser in dem Produkt ist, nennt man diesen Trockenabschnitt die Haupt- oder Sublimationstrocknung. Schließt man in dieser Phase der Trocknung eine Absperrvorrichtung zwischen Kammer und Kondensator für eine kurze Zeit (Sekunden), stellt sich in der Kammer der Gleichgewichtswasserdampfdruck ein, der der herrschenden Eistemperatur entspricht. Aus dem Druckanstieg kann man also direkt auf die Eistemperatur schließen. Das Verfahren nennt man barometrische Temperaturmessung (BTM).

Liegt kein Wasser in Form von Eis mehr vor, ist das restliche Wasser am Trockenprodukt absorbiert oder auch mehr oder weniger fest gebunden. Die Entfernung dieses Wassers nennt an Nach- oder Desorptionstrocknung. Die in dieser Phase desorbierbare Wassermenge hängt von der Temperatur des Produktes, der Art der Wasserbindung und der jeweils noch vorhandenen Wassermenge ab. Im thermodynamischen Gleichgewicht ist der jeweilige Wasserdampfdruck (für eine gegebene Temperatur) ein Maß für den Wassergehalt des Trockenproduktes. Diese Funktion: Wasserdampfdruck in Abhängigkeit vom Wassergehalt des Trockenproduktes wird als Desorptionsisotherme bezeichnet. Das Einstellen dieses Gleichgewichtes dauert aber - je nach Temperatur - in der Größenordnung Stunden. Während eines Trockenprozesses, der im allgemeinen nur mehrere Stunden dauert, kann man diese Meßgröße nicht wiederholt ermitteln. Es ist daher üblich, während der Nachtrocknung einzelne Flaschen mit Trockenprodukt oder eine Probe aus dem Schüttgut mit einem Vakuum-Manipulator aus der Trockenkammer zu entnehmen, die Restfeuchtigkeit (RF) zu bestimmen und bei Erreichten der gewünschten RF den Trockenprozeß zu beenden. Hat man eine solche Vorrichtung nicht, muß man mehrere Chargen fahren, die Trockenzeit unterschiedlich wählen und die zugehörige RF messen. Dann ist man aber darauf angewiesen, daß der Prozeßverlauf stets identisch gesteuert wird. Dabei sind gewisse Abweichungen unvermeidbar, und es ist stets ein Risiko abzuschätzen, welche Abweichungen noch tolerierbar sind und welche nicht. Beide Verfahren haben darüber hinaus den schwerwiegenden Nachteil, daß man die RF nur von einigen Proben bestimmen kann. Erfahrungsgemäß können die RF-Werte mehrerer Proben erheblich schwanken, z.B. je nachdem wo die Flaschen oder das Schüttgut in der Kammer angeordnet war. Es ist daher wünschenswert, eine durchschnittliche RF für alle Flaschen (das können bis einige Male 10.000 sein) oder über das gesamte Schüttgut (das kann bis zu einigen Tonnen sein) zu messen.

Ein derartiger "integraler" RF-Wert läßt sich erfindungsgemäß während der Nachtrocknung in gewissen Zeitabständen ohne nennenswerte Unterbrechung des Trockenverfahrens ermitteln. Dazu geht man wie folgt vor: Man schließt die Absperrvorrichtung zwischen Kammer und Kondensator für eine bestimmte Zeit. z.B. 30 oder 60 sec. Der während der Verschlußzeit desorbierende Wasserdampf läßt den Druck in der Kammer ansteigen. Aus der Verschlußzeit, dem Kammervolumen und der in der Kammer befindlichen Trockenmasse läßt sich die Desorptionsrate errechnen.

$$V \cdot \left( \frac{d_p}{d_t} \right) \qquad \text{liefert} \qquad \frac{1 \cdot \text{mbar}}{h}$$

$V$ = Kammervolumen; $d_p$ = Druckanstieg; $d_t$ = Meßzeit

Nach dem Gesetz von Avogadro lassen sich 1 . mbar in Masse (z.B. Gramm) umrechnen. Die Desorptionsrate (DR) ist definiert:

$$DR = \frac{\text{Masse des desorbierten Wassers} \cdot 100}{\text{Stunden} \cdot \text{Masse der Trockensubstanz}} \quad [\% / h] \text{ Wasser in \% der Trockenmasse pro Stunde}$$

Erfindungsgemäß läßt sich aus zwei solcher Messungen nacheinander der Zeitpunkt extrapolieren, zu dem die DR einen bestimmten kleinen Wert erreicht hat. Wählt man diesen Wert so klein, daß er die zu messende RF, z.B. innerhalb einer weiteren Stunde Trockenzeit nur tolerierbar beeinflußt, kann man von diesem, so definierten DR-Wert "DR-Nullpunkt" ausgehen und die RF-Werte zeitlich bis zum gegenwärtigeren Meßzeitpunkt integrieren. Der integrierte DR-Wert ist die gewünschte RF zum Meßzeitpunkt.

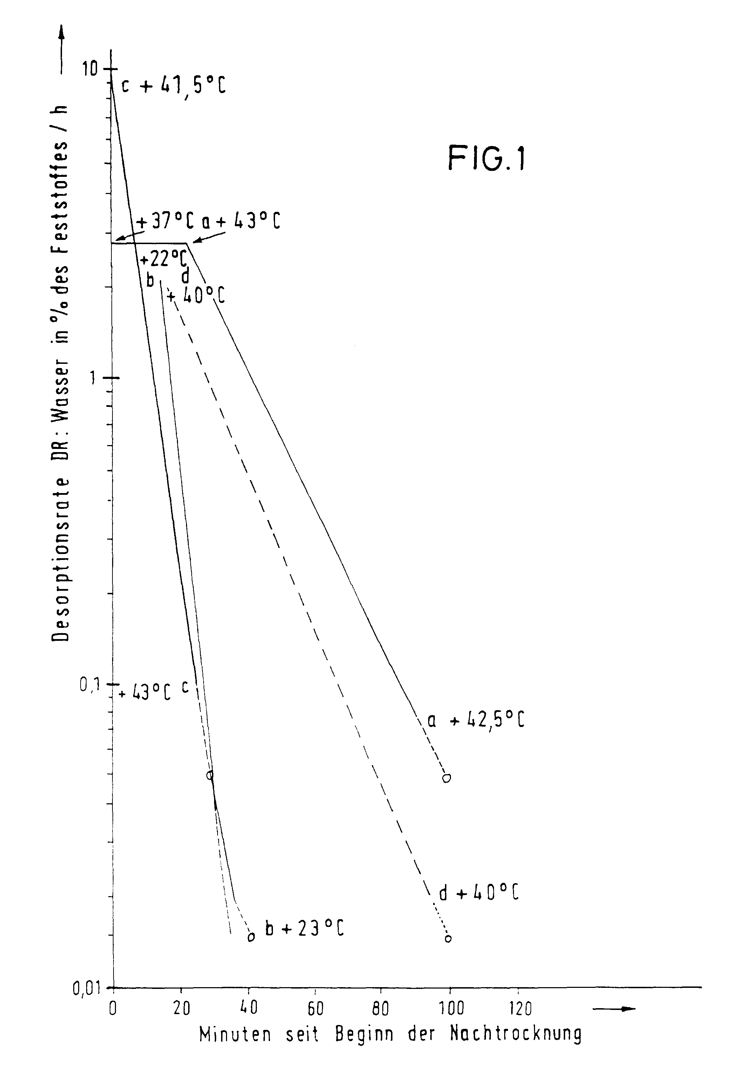

Abbildung 1 zeigt die Desorptionsrate verschiedener Produkte. Aufgetragen ist die Desorptionsrate DR (Wasser in % des Feststoffes /h) gegen die Zeit (Minuten seit Beginn der Nachtrocknung).

| Produkt a | Produkttemp. | 37°C bis 42,5°C |
|-----------|--------------|------------------|
| Produkt b | "            | 22°C " 23°C      |
| Produkt c | "            | 41,5°C " 43°C    |
| Produkt d | "            | 40°C " 40°C      |

Mit einem kleinen Kreis ist jeweils der Nullpunkt für die Integration der Restfeuchte gekennzeichnet.

Die Produkte a und d sind vergleichbar, die Haupttrocknung für Produkt d ist so gesteuert, daß die Haupttrockenzeit für d ca. 15 min kürzer war als für a.

Da die Neigung der DR-Kurve (Abb. 1 Kurve a) sich in der Übergangsphase von der Haupt- zur Nachtrocknung ändert, läßt sich der Beginn der Nachtrockenphase ermitteln: Der extrapolierte Nullpunkt der DR-Kurve darf sich nur noch unwesentlich ändern. Ähnliches kann bei sehr kleinen DR's auftreten, die normalerweise keine Bedeutung mehr haben. Will man diese Abweichungen berücksichtigen (Abb. 1 Kurve b), muß man den "Nullpunkt" bei der letzten Messung evtl. korrigieren, das gilt besonders, wenn sich die Temperatur des Produktes während der Nachtrocknung noch geringfügig ändert (Abb. 1 Kurve b).

Die Messung jedes DR-Wertes hat eine bestimmte Ungenauigkeit, deren Auswirkung man minimieren kann, wenn man erfindungsgemäß drei aufeinander folgende Messungen nimmt und aus ihnen mit der Methode der kleinsten Quadrate die wahrscheinlichste Gerade bestimmt. Der für die Integration benutzte "DR-Nullpunkt" liegt dann auf dieser Geraden.

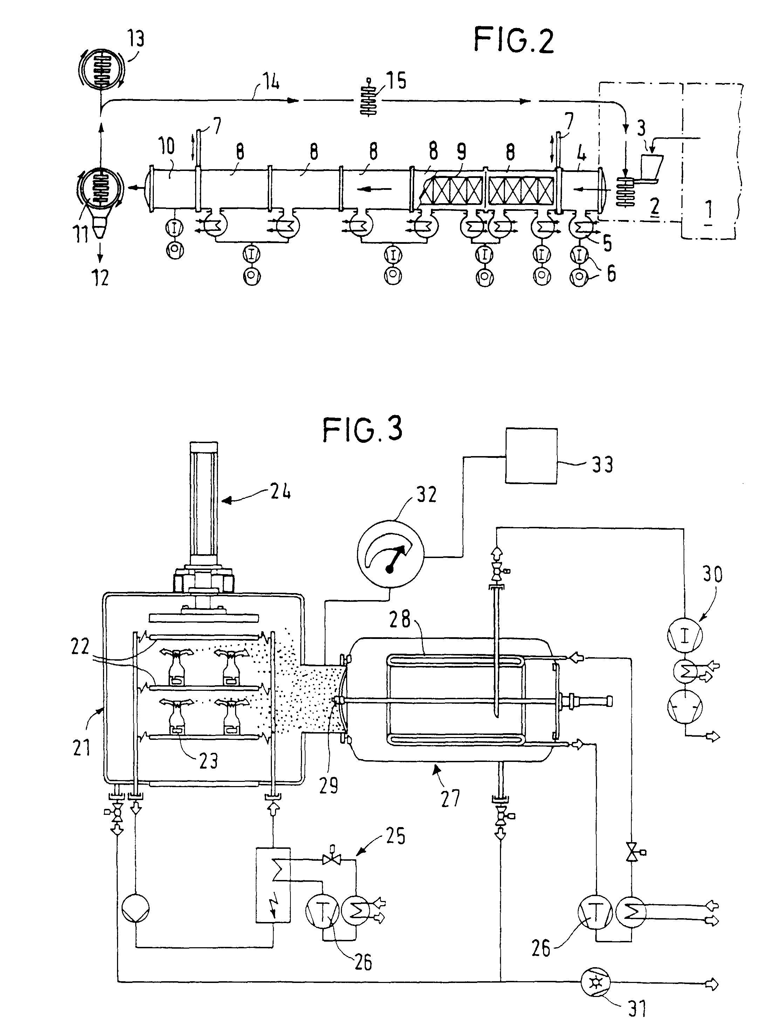

Die Abbildungen 2 und 3 zeigen Gefriertrocknungsanlagen, bei denen die Erfindung benutzt werden kann. Abbildung 2 stellt eine kontinuierliche Gefriertrocknungsanlage (System CQC der Firma Leybold AG, Hanau) dar. Sie umfaßt die folgenden Baugruppen:

1     Einfrierraum
2     Beladeraum
3     Schalenbeladung
4     Einfahrschleuse
5     Kondensator
6     Pumpsatz mit jeweils einer Drehkolbenvakuumpumpe und einer Wälzkolbenvakuumpumpe
7     Schieber (vakuumdicht)
8     Gefriertrocknungstunnel
9     Heizplattensystem mit abgesetzten CQC-Hängewagen
10    Ausfahrschleuse
11    Entladestation
12    Produktaustrag
13    Waschvorrichtung
14    Schienensystem für Wagentransport
15    CQC-Hängewagen

Die Erfindung kann in kontinuierlichen Gefriertrocknungsanlagen (Abb. 2) benutzt werden, wenn man zwei (oder drei) Druckanstiegsmessungen in der Ausfahrschleuse ausführt und aus ihnen, mit dem gerechneten Nullpunkt, durch Integration auf die RF schließt. Hat das Produkt in der Ausfahrschleuse noch eine zu hohe RF, kann man den Produkttransport und damit die Trockenzeit, um eine Taktzeit verlängern oder bei zu kleiner RF die Taktzeit vom nächsten Transportschritt an verkürzen.

Abbildung 3 zeigt eine diskontinuierlich betriebene, in der pharmazeutischen Industrie häufig verwendete Gefriertrocknungsanlage mit den folgenden Baugruppen:

21    Gefriertrocknungskammer
22    Stellplatten
23    Behälter mit gefrierzutrocknendem Produkt
24    Verschlußapparatur
25    Temperierkreislauf (Kühlen/Heizen)
26    Kältemaschinen
27    Kondensator

EP 0 811 153 B1

28  Kältemittelverdampfer
29  Absperrventil
30  Vakuumpumpstand
31  Förderpumpe für den Ablaß von Abtau- und Reinigungswasser
32  Druckmeßgerät
33  Rechner

Für die Bestimmung der RF sind verschiedene Methoden bekannt, die bei unterschiedlichen Produkten auch zu unterschiedlichen Ergebnissen führen, weil jede Methode bestimmte Arten von gebundenem Wasser noch oder nicht mehr erfaßt. Diese hier beschriebene Methode entspricht der thermogravimetrischen Methode (siehe May, J.C. u.a.: Measurement of Final Container Residual Moisture in Freeze-Dried Biological Products: International Symposium on Biological Product Freeze-Drying and Formulation, Seite 153 bis 164, Karger-Verlag, Basel, 1991). Der Unterschied zu der von May beschriebenen thermogravimetrischen Methode ist, daß die Trockensubstanz nicht mit einer Waage gewogen wird bis praktisch konstantes Gewicht erreicht ist, sondern der abgegebene Wasserdampf gemessen wird, bis die Wasserdampfabgabe praktisch zu Ende ist oder einen gewünschten Wert erreicht hat.

**Patentansprüche**

1. Verfahren zur Ermittlung der Restfeuchte während der Nachtrocknung im Trockenprodukt eines Gefriertrockenprozesses, dadurch gekennzeichnet, daß die Desorptionsrate während der Nachtrockenphase in bestimmten Zeitabständen (z.B. 10 min) gemessen wird, ein Rechner aus zwei oder mehreren dieser Meßwerte die Zeit errechnet, zu der eine Desorptionsrate erreicht wäre (Desorptionsraten-Nullpunkt), die die gewünschte Restfeuchte nur noch um einen tolerierbaren kleinen Betrag verändern würde; die jeweilige Restfeuchte wird vom Rechner durch zeitliche Integration der Desorptionsraten vom Nullpunkt bis zum Meßzeitpunkt ermittelt.

2. Verfahren nach Anspruch 1, dadurch gekennzeichnet, daß der Desorptionsratennullpunkt nach jeder Messung erneut bestimmt wird und daraus eine korrigierte Restfeuchte ermittelt wird.

3. Verfahren nach Anspruch 1 oder 2, dadurch gekennzeichnet, daß das Verfahren durch visuelles Ablesen der Instrumente, einer graphischen Extrapolation des Nullpunktes und einer Errechnung der Restfeuchte von Hand erfolgt.

4. Verfahren nach einem der Ansprüche 1, 2 oder 3 zur Ermittlung der Restfeuchte bei kontinuierlichen Gefriertrocknungsanlagen mit Ein- und Ausschleuskammern, dadurch gekennzeichnet, daß das Verfahren in der Ausschleuskammer angewandt wird und die Taktzeiten der Anlage und/oder das Temperaturprofil der Heizplatten so geändert wird, daß das Produkt in der Ausschleuskammer die gewünschte Restfeuchtigkeit erreicht.

5. Verfahren nach einem der Ansprüche 1, 2 oder 3 zur Ermittlung der Restfeuchte bei diskontinuierlichen Gefriertrocknungsanlagen mit einer Gefriertrocknungskammer mit Stellplatten, dadurch gekennzeichnet, daß das Verfahren in der Gefriertrocknungskammer angewendet wird und daß die Dauer der Nachtrocknungsphase und/ oder die Temperatur der Stellplatten so geändert wird, daß das Produkt zum Ende der Nachtrocknungsphase die gewünschte Restfeuchtigkeit erreicht.

6. Vorrichtung zur Ausführung des Verfahrens nach einem der Ansprüche 1 bis 5, dadurch gekennzeichnet, daß die Vorrichtung aus einem Vakuummeßinstrument, einer Absperrvorrichtung zwischen Trockenkammer und Eiskondensator und einem für die Durchführung des Verfahrens nach einem der Ansprüche 1 bis 5 progranmierten Rechner mit Display besteht, auf dem die Restfeuchtigkeit angezeigt wird.

**Claims**

1. Method of determining the residual moisture during final drying in the dry product of a freeze-drying process, characterized in that the desorption rate during the final drying phase is measured at specific (e.g. 10 minute) intervals, a computer calculates from two or more of said measured values the time at which a desorption rate would be reached (desorption rate zero point) which would vary the desired residual moisture only by an acceptable small amount; the respective residual moisture is determined by the computer using time integration of the desorption rates from the zero point to the measuring instant.

4

**2.** Method according to claim 1, characterized in that the desorption rate zero point is redefined after each measurement and used to determine a corrected residual moisture.

**3.** Method according to claim 1 or 2, characterized in that the method is effected manually by visual reading of the instruments, graphical extrapolation of the zero point and calculation of the residual moisture.

**4.** Method according to one of claims 1, 2 or 3 for determining the residual moisture in continuous freeze-drying installations having inward and outward transfer chambers, characterized in that the method is applied in the outward transfer chamber and the cycle times of the installation and/or the temperature profile of the heating plates are/is altered in such a way that the product in the outward transfer chamber reaches the desired residual moisture.

**5.** Method according to one of claims 1, 2 or 3 for determining the residual moisture in continuous freeze-drying installations having a freeze-drying chamber with positioning plates, characterized in that the method is applied in the freeze-drying chamber and that the duration of the final drying phase and/or the temperature of the positioning plates is altered in such a way that the product at the end of the final drying phase reaches the desired residual moisture.

**6.** Device for effecting the method according to one of claims 1 to 5, characterized in that the device comprises a vacuum gauge, a shut-off device between drying chamber and ice condenser and a computer programmed to effect the method according to one of claims 1 to 5 and having a display unit, on which the residual moisture is displayed.

**Revendications**

**1.** Procédé de détermination de l'humidité résiduelle pendant la dessiccation secondaire dans le produit sec d'un processus de lyophilisation, caractérisé en ce que le taux de désorption est mesuré pendant la phase de dessiccation secondaire à intervalles donnés (10 minutes par exemple), en ce qu'un ordinateur calcule à partir de deux ou de plusieurs de ces mesures l'instant auquel un taux de désorption (point zéro du taux de désorption), qui ne modifierait l'humidité résiduelle souhaitée que d'une faible valeur tolérable, serait atteint ; l'humidité résiduelle respective est déterminée par l'ordinateur par intégration dans le temps des taux de désorption du point zéro jusqu'à l'instant de la mesure.

**2.** Procédé suivant la revendication 1, caractérisé en ce que le point zéro du taux de désorption est redéterminé après chaque mesure, et en ce qu'une humidité résiduelle corrigée en est établie.

**3.** Procédé suivant l'une des revendications 1 et 2, caractérisé en ce que le procédé est assuré manuellement par lecture visuelle des instruments, d'une extrapolation graphique du point zéro, et d'un calcul de l'humidité résiduelle.

**4.** Procédé suivant l'une des revendications 1, 2 et 3 pour la détermination de l'humidité résiduelle sur des installations de lyophilisation en continu équipées de sas d'entrée et de sortie, caractérisé en ce que le procédé est appliqué dans le sas de sortie, et en ce que les cadences de l'installation et/ou le profil de température des plaques chauffantes sont modifiés de sorte que le produit atteint dans le sas de sortie l'humidité résiduelle souhaitée.

**5.** Procédé suivant l'une des revendications 1, 2 et 3 pour la détermination de l'humidité résiduelle sur des installations de lyophilisation en discontinu équipées d'une chambre de lyophilisation avec des plaques de fixation, caractérisé en ce que le procédé est appliqué dans la chambre de lyophilisation, et en ce que la durée de la phase de dessiccation secondaire et/ou la température des plaques de fixation sont modifiées de sorte que le produit atteint l'humidité résiduelle souhaitée à la fin de la phase de dessiccation secondaire.

**6.** Dispositif pour la réalisation du procédé suivant l'une des revendications 1 à 5, caractérisé en ce que le dispositif se compose d'un instrument de mesure du vide, d'un dispositif de verrouillage entre la chambre de dessiccation et le condenseur à glace, et d'un ordinateur programmé pour la réalisation du procédé suivant l'une des revendications 1 à 5, avec une unité de visualisation sur laquelle est affichée l'humidité résiduelle.

FIG.1

## FIG.2

## FIG.3